# EUROPÄISCHE PATENTSCHRIFT

(11) **EP 2 048 099 B1**
(45) Veröffentlichungstag und Bekanntmachung des Hinweises auf die Patenterteilung: **23.06.2010**
(21) Anmeldenummer: 08017246.3
(22) Anmeldetag: 30.09.2008
(51) Int. Cl.: B65G 51/03

(54) **Luftförderer mit Vorrichtung zum senkrechten Ausrichten von Flaschen**
Air conveyor with device for vertically aligning bottles
Transporteur à air comprenant un dispositif d'alignement vertical des bouteilles

(30) Priorität: 09.10.2007 DE 102007048545
(43) Veröffentlichungstag der Anmeldung: 15.04.2009
(73) Patentinhaber: Krones AG, 93073 Neutraubling (DE)
(72) Erfinder: Götzl, Reiner, 93080 Pentling (DE); Seidl, Andreas, 93093 Donaustauf (DE); Klarl, Hermann, 93107 Thalmassing (DE)
(74) Vertreter: Grünecker, Kinkeldey, Stockmair & Schwanhäusser Anwaltssozietät

(56) Entgegenhaltungen:
- WO-A-01/60724
- FR-A- 2 781 470
- FR-A- 2 796 052
- FR-A- 2 806 067
- FR-A- 2 807 414
- US-A- 5 246 314
- US-A- 5 299 889
- US-A- 5 820 306

## Beschreibung

Die Erfindung betrifft einen Luftförderer zum Transport von Kunststoffflaschen durch Beaufschlagen des Mündungsbereichs der Flaschen mit Luft. Die Erfindung betrifft außerdem ein Verfahren zum Transportieren von Kunststoffflaschen mit einem Luftförderer.

Zum Transport von Kunststoffflaschen in Industrieanlagen werden häufig Luftförderer verwendet. In solchen Anlagen sind die Flaschen meist an ihren Tragringen in Führungsschienen gehängt und werden mit Hilfe von Luft fortbewegt. Da für diese Art der Fortbewegung keine aufwändige Mechanik benötigt wird, ist eine solche Anlage wenig störanfällig.

Aus der FR 2 807 414 ist beispielsweise ein Luftförderer gemäß dem Oberbegriff des Anspruchs 1 bzw. 11 bekannt, der es ermöglicht, einzelne oder Gruppen von Flaschen mit Hilfe von Luft zu transportierten.

Bei einem bekannten Luftförderer der Anmelderin erfolgt das Beaufschlagen mit Luft im Bereich der Flaschenmündungen, wodurch die vorantreibende Kraft hauptsächlich an den Flaschenmündungen angreift. Mit diesem Verfahren können mehr als 30.000 Flaschen pro Stunde in einem Luftförderer transportiert werden und entsprechend groß sind die Transportgeschwindigkeiten.

Mit zunehmender Geschwindigkeit spielt jedoch der Luftwiderstand eine immer bedeutendere Rolle. Da der Luftwiderstand im Bereich der größten Angriffsfläche der Flaschen am größten ist und da die Flaschen nur an den Flaschenmündungen mit Luft beaufschlagt werden, kommt es zu einer starken Schräglage der Flaschen. Diese Schräglage der Flaschen wirkt sich beim Transport der Flaschen nicht negativ aus. Soll eine Flasche jedoch am Ende eines Luftförderers an eine weitere Transportvorrichtung (z. B. an einem Sägezahnstern) übergeben werden, kann die Schräglage der Flaschen Schwierigkeiten bereiten.

Daher liegt der Erfindung die Aufgabe zugrunde, die Flaschenübergabe im Endbereich eines Luftförderers an einen weiteren Förderer im wesentlichen störunanfälliger zu machen, ohne die Flaschen dabei abzubremsen.

Diese Aufgabe wird gelöst mit einem Luftförderer nach Anspruch 1 und einem Verfahren zum Transportieren von Kunststoffflaschen nach Anspruch 11.

Bevorzugte Ausführungsformen sind in den abhängigen Ansprüchen offenbart.

Flaschen weisen in der Regel im Mündungsbereich einen mehr oder weniger ausgeprägten Tragring auf, der bei der Produktion und / oder bei der weiteren Behandlung in den nachfolgenden Anlagen zu Handhabungszwecken gebraucht wird. Der Luftförderer zum Transport von Kunststoffflaschen bewegt die Flaschen durch Beaufschlagen der Flaschenmündungen mit Luft, wobei die zu transportierenden Flaschen mit ihrem Tragring an einer Schiene hängen. Beim Transport befinden sich die Flaschen in einer Schräglage. Um die Flaschen im Endbereich des Luftförderers möglichst vertikal auszurichten, sind am Ende des Luftförderers, Mittel vorgesehen, um die Flaschenkörper mit Luft zu beaufschlagen. Diese Mittel sind so angeordnet, dass die Flaschen im Wesentlichen vertikal ausgerichtet werden bzw. die Mündungen der Flaschen nach oben zeigen und die Böden der Flaschen nach unten zeigen.

Das Beaufschlagen der Flaschenkörper mit Luft erfolgt in einer Art und Weise, dass die Schräglage der Flaschen abnimmt und die Flaschen möglichst vertikal ausgerichtet werden. Die Abweichung der so ausgerichteten Flaschen von der Vertikalen beträgt weniger als 10° und vorzugsweise weniger als 5°.

Beim Beaufschlagen der Flaschenkörper mit Luft werden die Flaschenkörper bevorzugt von der Seite bzw. schräg von der Seite mit Luft angeblasen. Es sind jedoch auch Ausführungsformen der Erfindung möglich, bei denen die Flaschenkörper von hinten, von unten oder schräg von unten angeblasen werden. Mögliche Anblaswinkel zur Bewegungsrichtung bzw. Transportrichtung der Flaschen können alle Werte von 0° bis 90° annehmen.

Um die Flaschenkörper mit Luft zu beaufschlagen, werden typischerweise Führungsbleche, die mit Kiemen oder Düsen versehen sind, verwendet. Kiemen sind in ein Führungsblech eingearbeitete Schlitze, durch die Luft in einer Vorzugsrichtung ausströmt. Führungsbleche mit Düsen sind in der Herstellung aufwändiger, erlauben jedoch ein sehr präzises Anblasen. Es sind auch Ausführungsformen mit Kombinationen von Kiemen und Düsen denkbar. Die Kiemen oder Düsen können sich in verschiedenen Höhen an den Führungsblechen befinden. Beispielsweise können die Kiemen oder Düsen in diagonalen Reihen auf den Führungsblechen angeordnet sein, bevorzugte Winkel zu den Längsseiten der Führungsbleche liegen im Bereich von 20° bis 40°. Das Anordnen der Kiemen oder Düsen in verschiedenen Höhen bzw. das diagonale Anordnen der Kiemen oder Düsen, ermöglicht, dass in ein und dem selben Luftförderer Flaschen mit verschiedenen Größen und verschiedenen Schräglagen transportiert und vertikal ausgerichtet werden können. Bei Flaschen mit geringerem oder größerem Eigengewicht kann die Anblasstärke entsprechend verringert oder erhöht werden.

Zur Luftversorgung werden typischerweise Gebläseventilatoren, Kompressoren bzw. eine externe Luftversorgung eingesetzt. Die Luftversorgung zum Beaufschlagen der Flaschenkörper ist entweder dieselbe Luftversorgung wie zum Beaufschlagen der Flaschenmündungen, oder es wird zum Beaufschlagen der Flaschenkörper eine separate Luftversorgung verwendet.

Weiter kann der Luftförderer Mittel zum Beaufschlagen der Flaschenkörper mit Luft umfassen, nämlich ein oder mehrere Detektoren zur Erkennung der Schräglage einzelner Flaschen und eine Steuerung der Luftversorgung, welche die detektierte Schräglage der Flaschen berücksichtigen kann. Auf diese Art und Weise können Flaschen mit großer Schräglage stärker angeblasen werden als Flaschen mit kleiner Schräglage, sodass nach Möglichkeit alle Flaschen nach dem Beaufschlagen der Flaschenkörper im Endbereich des Luftförderers möglichst genau vertikal ausgerichtet sind.

Des Weiteren kann der Luftförderer typischerweise im Endbereich einen oder mehrere Haken umfassen, womit ankommende Flaschen schlagartig abgebremst bzw. gestoppt werden können. Diese Vorgehensweise kann nötig werden, wenn der Flaschentransport im Luftförderer schnell unterbrochen werden muss.

Das Verfahren zum Transportieren von Kunststoffflaschen mit einem Luftförderer umfasst das Beaufschlagen mit Luft im bereich der Flaschenmündungen, um die Flaschen anzutreiben. Zusätzlich werden am Ende des Luftförderers, die Flaschenkörper mit Luft beaufschlagt, um die Flaschen in Richtung der Senkrechten auszurichten.

Beim Ausrichten der Flaschen wird typischerweise eine vollständig senkrechte Orientierung angestrebt, wobei die Abweichungen von der Senkrechten weniger als 5° betragen sollen.

Um die Flaschen senkrecht auszurichten, können die Flaschenkörper mit einem Winkel zwischen Anblasrichtung und Transportrichtung der Flaschen im Bereich von 0° bis 90° angeblasen werden. Beim senkrechten Ausrichten der Flaschen nimmt die Geschwindigkeit der Flaschen nicht ab (da sich der Flaschenkörper zusätzlich zur Gesamtbewegung der Flasche nach vorne, d. h. in Bewegungsrichtung der Flasche, bewegt).

In einer weiteren Ausführungsform der Erfindung umfasst das Verfahren zum Transportieren von Kunststoffflaschen mit einem Luftförderer zusätzliche Schritte. Um die Flaschen im Endbereich des Luftförderers genauer senkrecht ausrichten zu können, wird die Schräglage einzelner Flaschen zunächst detektiert, und dann wird diese Information dazu verwendet, den Beaufschlagungsvorgang im Endbereich des Luftförderers anzupassen, sodass Flaschen mit größerer Schräglage stärker angeblasen werden, als Flaschen mit geringerer Schräglage. Dies führt dazu, dass Flaschen mit unterschiedlicher Schräglage möglichst einheitlich bzw. möglichst genau senkrecht ausgerichtet werden.

Weitere Aspekte von möglichen Ausführungsformen der Erfindung werden anhand der Figuren deutlich. Dabei zeigt:

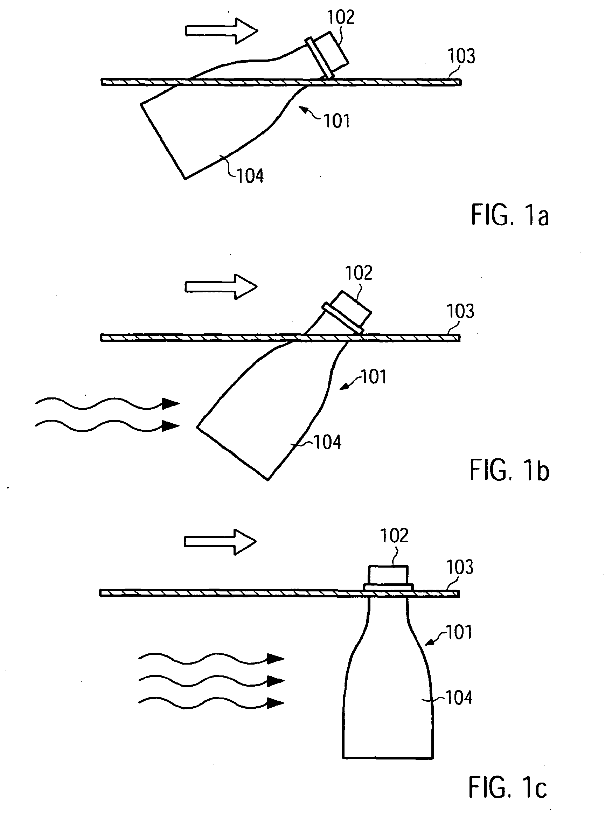

- Figur 1 a: eine schematische Ansicht einer Flasche in einem Luftförderer, die sich in einer starken Schräglage befindet;
- Figur 1 b: eine schematische Ansicht einer Flasche in einem Luftförderer, die sich in einer weniger starken Schräglage befindet als die Flasche in Figur 1 a;
- Figur 1 c: eine schematische Ansicht einer Flasche in einem Luftförderer, die senkrecht ausgerichtet ist;
- Figur 2: eine schematische Ansicht eines Luftförderers mit Führungsblechen;
- Figur 3a: eine schematische Seitenansicht einer Flasche in einem Luftförderer, die mit einem Haken festgehalten wird;
- Figur 3b: eine schematische Draufsicht einer Flasche in einem Luftförderer, die von einem Haken festgehalten wird; und
- Figur 4: einen Prozessablauf zum möglichst vertikalen Ausrichten von Flaschen.

Figur 1 illustriert das vertikale Ausrichten einer Flasche 101, in einem Luftförderer. Der Luftförderer hat unter anderem zwei auf gleicher Höhe gegenüberliegende Führungsschienen 103, von denen in Figur 1 nur eine abgebildet ist. Die Führungsschienen 103 sind paarweise parallel zueinander angeordnet. Der Abstand zwischen zwei Führungsschienen 103 ist so gewählt, dass ein Flaschenhals gerade zwischen die beiden Führungsschienen 103 passt, und die Flasche 101 mit dem Tragring der Flasche auf den beiden Führungsschienen 103 aufliegt. In dem angedeuteten Luftförderer wird die Flaschenmündung 102 mit Luft beaufschlagt, sodass die Flasche 101 auf den Führungsschienen 103 gleitet. Die Gesamtbewegungsrichtung der Flasche 101 wird durch einen Pfeil angedeutet. In Figur 1 a befindet sich die Flasche 101 in einer starken Schräglage, weil die Flasche 101 nur im Bereich der Flaschenmündung 102 mit Luft beaufschlagt wird, und weil der durch die Vorwärtsbewegung zustande kommende Luftwiderstand hauptsächlich auf den Flaschenkörper einwirkt.

In Figur 1b wird zusätzlich der Flaschenkörper 104 mit Luft beaufschlagt (gewellte Pfeile), sodass sich die Flasche 101 senkrecht auszurichten beginnt. In Figur 1c ist die vollständig senkrecht ausgerichtete Flasche 101 zu sehen. Das zusätzliche Beaufschlagen des Flaschenkörpers 104 mit Luft ermöglicht die Kapazität eines Luftförderers in einer beispielhaften Ausführungsform von 30.000 Flaschen pro Stunde auf bis zu 120.000 Flaschen pro Stunde zu steigern.

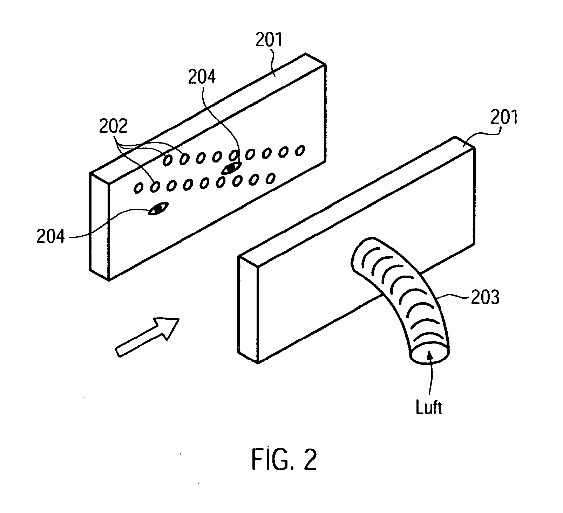

Figur 2 zeigt einen Teil eines Luftförderers nach einer möglichen Ausführungsform der Erfindung. Die Hauptbewegungsrichtung der Flaschen wird durch einen Pfeil angedeutet. Zwei Führungsbleche 201 sind parallel zu einander angeordnet, wobei beide Führungsbleche 201 mit Kiemen oder Düsen 202 ausgestattet sind, welche über eine oder mehrere Luftversorgungen 203 mit Luft versorgt werden. Die Kiemen bzw. Düsen 202 können beispielsweise in einer oder mehreren Reihen auf einem Führungsblech 201 angeordnet sein. Bevorzugt verlaufen diese Reihen diagonal, sodass sich die Kiemen bzw. Düsen 202 in unterschiedlichen Höhen am Führungsblech 201 befinden.

Optional sind ein oder mehrere Detektoren 204 an einem oder beiden Führungsblechen 201 angebracht, welche die Schräglage einzelner Flaschen 101 erkennen können. Die Ausgangssignale der Detektoren 204 können an eine Steuerung (nicht gezeigt) weiter geleitet werden und dann dazu verwendet werden, das vertikale Ausrichten einzelner Flaschen 101 zu verbessern, indem die Steuerung beispielsweise die Luftversorgung anweist, entsprechend der Schräglage einzelner Flaschen 101 mehr bzw. weniger Luft zu liefern. Möglich ist auch ein Ansteuern von Ventilen (z.B. Magnetventilen) zum regeln des Luftstroms, sodass einzelne Flaschen 101 durch gezieltes Anblasen mit Luft vertikal ausgerichtet werden können. Die Detektoren 204 können sich an verschiedenen Stellen eines Führungsbleches 201 befinden oder, je nach Konstruktion, auch vor oder hinter einem Führungsblech 201. Die Detektorposition ist beispielsweise weiter vorne, um zunächst die Schräglage einer Flasche erkennen zu können und weiter hinten, um nach dem zusätzlichen Beaufschlagen des Flaschenkörpers 104 mit Luft überprüfen zu können, ob die Flasche 101 ausreichend senkrecht ausgerichtet ist.

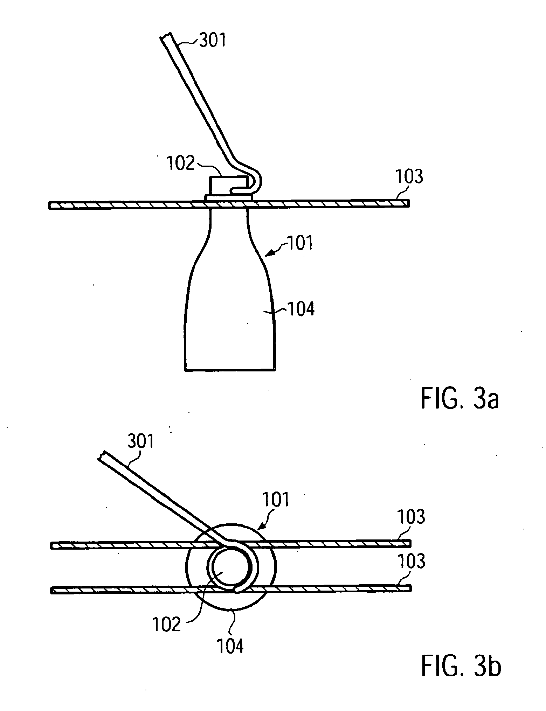

Ein weiterer möglicher Aspekt der Erfindung ist in Figur 3 skizziert. Um Flaschen 101 möglichst schnell anhalten zu können, greift ein Haken 301 in der Nähe der Flaschenmündung 102 an den Flaschenhals, sodass ein Weiterbewegen der Flasche 101 (in diesem Fall von links nach rechts) verhindert wird. Figuren 3a und 3b zeigen das gleiche Szenario einmal von der Seite und einmal von oben.

Um im Endbereich eines Flaschenförderers zu verhindern, dass schnell ankommende Flaschen 101 nach oben steigen (bzw. nicht mehr auf den Führungsschienen 103 aufliegen), kann eine Niederhaltescheibe verwendet werden, welche sich knapp über den Flaschenmündungen 102 befindet. Hierdurch kann verhindert werden, dass Flaschen 101 bei der Übergabe an weitere Geräte, wie z. B. einen Sägezahnstern, verkeilen bzw. beschädigt werden.

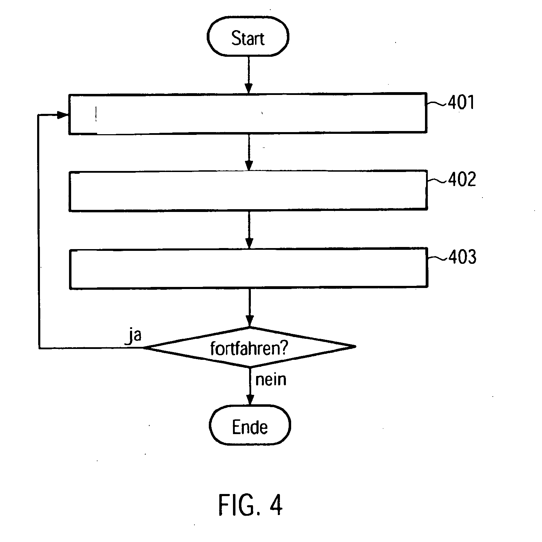

Figur 4 zeigt einen beispielhaften Prozessablauf zum senkrechten Ausrichten von Flaschen. In Schritt 401 wird zunächst die Schräglage einer Flasche detektiert, um einen Anhaltspunkt dafür zu bekommen, wie stark die Flasche angeblasen werden soll. Diese Information wird in Schritt 402 verwendet, um den Luftstrom zum Anblasen von Flaschen zu steuern bzw. anzupassen. In Schritt 403 wird der Flaschenkörper mit Luft beaufschlagt, wobei die Schräglage der Flasche durch Anpassen des Luftstroms berücksichtigt ist. Falls mehrere Detektoren vorhanden sind, besteht die Möglichkeit, diesen Zyklus mehrfach zu durchlaufen und jeweils die aktuelle Schräglage einer Flasche zu berücksichtigen. Des Weiteren besteht die Möglichkeit eine Restschräglage der in Richtung der Vertikalen ausgerichteten Flaschen zu berücksichtigen, um nachfolgende Flaschen noch genauer ausrichten zu können.

## Patentansprüche

1. Luftförderer zum Transport von Kunststoffflaschen (101) durch Beaufschlagen des Mündungsbereichs (102) der Falschen mit Luft,
wobei
sich die Flaschen beim Transport in einer Schräglage befinden, und **dadurch gekennzeichnet, dass**
am Ende des Luftförderers Mittel (201-204) vorgesehen sind, um die Flaschenkörper (104) mit Luft zu beaufschlagen, wobei die Mittel so angeordnet sind, dass die Flaschen im wesentlichen vertikal ausgerichtet werden, sodass die Mündungen (102) der Flaschen nach oben zeigen und die Böden der Flaschen nach unten zeigen,
wobei die Abweichung der ausgerichteten Flaschen (101) von der Vertikalen weniger als 1°, 2°, 3°, 4°, 5°, 6°, 8° oder 10° beträgt.

2. Luftförderer nach Anspruch 1, wobei die Mittel (201-204) ein Anblasen der Flaschenkörper (104) von der Seite und/oder schräg von der Seite und/oder von hinten und/oder von unten und/oder schräg von unten ermöglichen.

3. Luftförderer nach Anspruch 1 oder 2, wobei der Anblaswinkel zur Bewegungsrichtung der Flaschen (101) in einem Bereich von 0°, 10°, 20°, 30°, 40°, 50°, 60°, 70° oder 80° bis 10°, 20°, 30°, 40°, 50°, 60°, 70°, 80° oder 90° liegt.

4. Luftförderer nach einem der Ansprüche 1-3, wobei die Mittel (201-204) Führungsbleche (201) umfassen, welche mit Kiemen und/oder Düsen (202) zum Beaufschlagen mit Luft versehen sind.

5. Luftförderer nach Anspruch 4, wobei sich die Kiemen und/oder Düsen (202) in verschiedenen Höhen an den Führungsblechen (201) befinden.

6. Luftförderer nach Anspruch 4 oder 5, wobei die Kiemen und/oder Düsen (202) diagonal auf den Führungsblechen (201) angeordnet sind, vorzugsweise mit einem Winkel relativ zu den Längsseiten der Führungsbleche im Bereich von 0°, 10°, 20°, 30°, 40°, 50°, 60°, 70° oder 80° bis 10°, 20°, 30°, 40°, 50°, 60°, 70°, 80° oder 90°.

7. Luftförderer nach einem der Ansprüche 1-6, wobei die Mittel (201-204) eine Luftversorgung (203) umfassen mit einer oder mehreren der folgenden Komponenten: Gebläse, Ventilator, Kompressor und externe Luftversorgung.

8. Luftförderer nach einem der Ansprüche 1-7, wobei die Mittel (201-204) einen oder mehrere Detektoren (204) zur Erkennung der Schräglage einzelner Flaschen (201) umfassen.

9. Luftförderer nach Anspruch 8, wobei die Mittel (201-204) zusätzlich eine Steuerung umfassen, welche die von den Detektoren (204) erkannte Schräglage berücksichtigen kann, um das Beaufschlagen der Flaschenkörper (104) dahingehend zu optimieren, dass Flaschen (101) mit großer Schräglage stärker beaufschlagt werden als Flaschen mit kleiner Schräglage.

10. Luftförderer nach einem der Ansprüche 1-9, wobei der Luftförderer zusätzlich in einem Teilbereich, vorzugsweise am Ende, einen oder mehrere Haken (301) umfasst, womit ankommende Flaschen (101) im Bereich des Flaschenhalses eingehakt und/oder angehalten werden können.

11. Verfahren zum Transportieren von Kunststoffflaschen (101) mit einem Luftförderer, bei dem zum Fördern der Flaschen die Flaschen im Bereich der Flaschenmündungen (102) mit Luft beaufschlagt werden,
wobei sich die Flaschen beim Transport in einer Schräglage befinden, und **dadurch gekennzeichnet, dass**
Flaschenkörper (104) im Endbereich des Luftförderers zusätzlich mit Luft beaufschlagt werden (403), um die Flaschen in Richtung der Senkrechten auszurichten,
wobei die Abweichung der ausgerichteten Flaschen (101) von der Senkrechten weniger als 1°, 2°, 3°, 4°, 5°, 6°, 8° oder 10° beträgt.

12. Verfahren nach Anspruch 11, wobei der Winkel zwischen Anblasrichtung und Transportrichtung der Flaschen (101) im Bereich von 0°, 15°, 30°, 45°, 60° oder 75° bis 15°, 30°, 45°, 60°, 75° oder 90° liegt.

13. Verfahren nach einem der Ansprüche 11 oder 12, wobei das senkrechte Ausrichten der Flaschen (101) erfolgt, ohne die Geschwindigkeit besagter Flaschen zu verringern.

14. Verfahren nach einem der Ansprüche 11-13, weiter umfassend die Schritte:
Detektieren (401) der Schräglage einzelner Flaschen; und
Anpassen (402) des Beaufschlagungsvorgangs im Endbereich des Luftförderers, wobei Flaschen mit größerer Schräglage stärker angeblasen werden als Flaschen mit geringerer Schräglage.

## Claims

1. Air conveyor for transporting plastic bottles (101) by applying air to the opening area (102) of the bottles, the bottles being in an oblique position during transport, and **characterized in that**, at the end of the air conveyor, means (201-204) are provided for applying air to the bottle bodies (104), the means being arranged such that the bottles are oriented essentially vertically, so that the openings (102) of the bottles face upwards and the bottoms of the bottles face downwards, wherein the deviation of the oriented bottles (101) from the vertical is less than 1°, 2°, 3°, 4°, 5°, 6°, 8° or 10°.

2. Air conveyor according to claim 1, wherein the means (201-204) permit an airflow against the bottle bodies (104) from the side and/or diagonally from the side and/or from behind and/or from the bottom and/or diagonally from the bottom.

3. Air conveyor according to claim 1 or 2, wherein the airflow angle to the direction of movement of the bottles (101) is in a range of 0°, 10°, 20°, 30°, 40°, 50°, 60°, 70° or 80° to 10°, 20°, 30°, 40°, 50°, 60°, 70°, 80° or 90°.

4. Air conveyor according to one of claims 1 to 3, wherein the means (201-204) comprise guide plates (201) which are provided with gills and/or nozzles (202) for the application with air.

5. Air conveyor according to claim 4, wherein the gills and/or nozzles (202) are located at different levels at the guide plates (201).

6. Air conveyor according to claim 4 or 5, wherein the gills and/or nozzles (202) are arranged diagonally on the guide plates (201), preferably at an angle relative to the longitudinal sides of the guide plates in a range of 0°, 10°, 20°, 30°, 40°, 50°, 60°, 70° or 80° to 10°, 20°, 30°, 40°, 50°, 60°, 70°, 80° or 90°.

7. Air conveyor according to one of claims 1 to 6, wherein the means (201-204) comprise an air supply (203) with one or several of the following components: blower, fan, compressor and external air supply.

8. Air conveyor according to one of claims I to 7, wherein the means (201-204) comprise one or several detectors (204) for detecting the oblique position of individual bottles (201).

9. Air conveyor according to claim 8, wherein the means (201-204) additionally comprise a control which can take into consideration the oblique position detected by the detectors (204) to optimize the application of air to the bottle bodies (104) such that a stronger airflow is applied to bottles (101) with a more oblique position than to bottles with a less oblique position.

10. Air conveyor according to one of claims 1 to 9, wherein the air conveyor additionally comprises in a partial area, preferably at the end, one or several hooks (301) with which arriving bottles (101) can be hooked in and/or stopped in the area of the neck of the bottle.

11. Method of transporting plastic bottles (101) with an air conveyor, in which air is applied to the bottles in the area of the bottle openings (102) for transporting the bottles, the bottles in an oblique position during transport, and **characterized in that**, in the end area of the air conveyor, air is additionally applied (403) to bottle bodies (104) to orient the bottles in the direction of the vertical, wherein the deviation of the oriented bottles (101) from the vertical is less than 1 °, 2°, 3°, 4°, 5°, 6°, 8° or 10°.

12. Method according to claim 11, wherein the angle between the airflow direction and the transport direction of the bottles (101) is in a range of 0°, 15°, 30°, 45°, 60° or 75° to 15°, 30°, 45°, 60°, 75° or 90°.

13. Method according to one of claims 11 or 12, wherein the vertical orientation of the bottles (101) is effected without reducing the speed of said bottles.

14. Method according to one of claims 11 to 13, further comprising the following steps:
detecting (401) the oblique position of individual bottles; and
adjusting (402) the air application process in the end area of the air conveyor, wherein a stronger airflow is applied to bottles with a more oblique position than to bottles with a less oblique position.

## Revendications

1. Convoyeur pneumatique pour le transport de bouteilles en matière plastique (101) par sollicitation en air de la zone d'ouverture (102) des bouteilles, les bouteilles se situant dans une position oblique lors du transport, **caractérisé en ce que** sont prévus des moyens (201 - 204) à l'extrémité du convoyeur pneumatique pour solliciter en air les corps de bouteilles (104), les moyens étant disposés de sorte que les bouteilles sont orientées essentiellement dans la direction verticale, de sorte que les ouvertures (102) des bouteilles sont dirigées vers le haut et que les fonds des bouteilles sont dirigés vers le bas,
l'écart des bouteilles orientées (101) par rapport à la verticale étant de moins de 1°, 2°, 3°, 4°, 5°, 6°, 8° ou 10°.

2. Convoyeur pneumatique suivant la revendication 1, dans lequel les moyens (201 - 204) permettent un soufflage des corps de bouteilles (104) à partir du côté et/ou en oblique à partir du côté et/ou de l'arrière et/ou du bas et/ou en oblique à partir du bas.

3. Convoyeur pneumatique suivant l'une des revendications 1 et 2, dans lequel l'angle de soufflage par rapport à la direction de déplacement des bouteilles (101) se situe dans une plage de 0°, 10°, 20°, 30°, 40°, 50°, 60°, 70° ou 80° à 10°, 20°, 30°, 40°, 50°, 60°, 70°, 80° ou 90°.

4. Convoyeur pneumatique suivant l'une des revendications 1 - 3, dans lequel les moyens (201 - 204) comportent des tôles de guidage (201), munies d'ouïes et/ou de buses (202) pour la sollicitation en air.

5. Convoyeur pneumatique suivant la revendication 4, dans lequel les ouïes et/ou buses (202) se situent à différentes hauteurs sur les tôles de guidage (201).

6. Convoyeur pneumatique suivant l'une des revendications 4 et 5, dans lequel les ouïes et/ou buses (202) sont disposées en diagonale sur les tôles de guidage (201), de préférence avec un angle par rapport aux côtés longitudinaux des tôles de guidage dans la plage de 0°, 10°, 20°, 30°, 40°, 50°, 60°, 70° ou 80° à 10°, 20°, 30°, 40°, 50°, 60°, 70°, 80° ou 90°.

7. Convoyeur pneumatique suivant l'une des revendications 1 - 6, dans lequel les moyens (201 - 204) comportent une alimentation en air (203) avec un ou plusieurs des composants suivants : soufflante, ventilateur, compresseur et alimentation externe en air.

8. Convoyeur pneumatique suivant l'une des revendications 1 - 7, dans lequel les moyens (201 - 204) comportent un ou plusieurs détecteurs (204) pour détecter la position oblique de bouteilles individuelles (201).

9. Convoyeur pneumatique suivant la revendication 8, dans lequel les moyens (201 - 204) comportent en supplément une commande qui peut tenir compte de la position oblique détectée par les détecteurs (204), afin d'optimiser la sollicitation des corps de bouteilles (104) en ce sens que des bouteilles (101) d'une forte position oblique sont sollicitées plus intensément que des bouteilles d'une faible position oblique.

10. Convoyeur pneumatique suivant l'une des revendications 1 - 9, dans lequel le convoyeur comporte en supplément dans une zone partielle, de préférence à l'extrémité, un ou plusieurs crochets (301), par lesquels sont accrochées et/ou maintenues des bouteilles en arrivée (101) dans la zone de leur goulot.

11. Procédé de transport de bouteilles en matière plastique (101) par un convoyeur pneumatique dans lequel, pour le transport des bouteilles, ces dernières sont sollicitées en air dans la zone de leurs ouvertures (102), les bouteilles se situant lors du transport dans une position oblique,
**caractérisé en ce que**
des corps de bouteilles (104) sont sollicités en supplément en air dans la zone d'extrémité du convoyeur pneumatique, afin d'orienter les bouteilles en direction de la verticale,
l'écart des bouteilles orientées (101) par rapport à la verticale étant de moins de 1°, 2°, 3°, 4°, 5°, 6°, 8° ou 10°.

12. Procédé suivant la revendication 11, dans lequel l'angle entre la direction de soufflage et la direction de transport des bouteilles (101) se situe dans la plage de 0°, 15°, 30°, 45°, 60° ou 75° à 15°, 30°, 45°, 60°, 75° ou 90°.

13. Procédé suivant l'une des revendications 11 et 12, dans lequel l'orientation verticale des bouteilles (101) s'effectue sans réduction de la vitesse desdites bouteilles.

14. Procédé suivant l'une des revendications 11 - 13, comprenant en outre les étampes :
détection (401) de la position oblique de bouteilles individuelles ; et
adaptation (402) de l'opération de sollicitation dans la zone d'extrémité du convoyeur pneumatique, des bouteilles d'une position oblique plus forte étant soumises à un soufflage plus intense que des bouteilles d'une position oblique plus faible.
